# EUROPÄISCHE PATENTSCHRIFT

(11) **EP 1 333 199 B1**
(45) Veröffentlichungstag und Bekanntmachung des Hinweises auf die Patenterteilung: **24.01.2007**
(21) Anmeldenummer: 02027350.4
(22) Anmeldetag: 07.12.2002
(51) Int. Cl.: F16H 61/24, F16H 59/04

(54) **Vorrichtung zum Erhöhen einer Wählkraft**
Device for increasing a selection force
Dispositif pour augmenter une force de sélection

(30) Priorität: 31.01.2002 US 353315 P; 02.02.2002 DE 10204230
(43) Veröffentlichungstag der Anmeldung: 06.08.2003
(73) Patentinhaber: Schaeffler KG, 91074 Herzogenaurach (DE)
(72) Erfinder: Krämer, Klaus, 91460 Baudenbach (DE); Pintus, Susanne, 91074 Herzogenaurach (DE)

(56) Entgegenhaltungen:
- EP-A- 0 849 506
- DE-A1- 19 918 509
- US-A- 4 567 785
- US-A- 5 950 493

## Beschreibung

### Gebiet der Erfindung

Die Erfindung betrifft eine Vorrichtung zum Erhöhen einer Wählkraft an einem um eine Schwenkachse sowie um eine quer zur Schwenkachse ausgerichtete Kippachse schwenkbaren Schalthebel, wobei die Wählkraft bei Schwenkbewegungen des Schalthebels um die Kippachse mittels mindestens eines gegen eine Feder beweglichen Hebels und einer mit dem Hebel in einer Wirkverbindung stehenden Ablaufrolle erzeugt ist.

### Hintergrund der Erfindung

Eine Vorrichtung zum Erzeugen von Wählkräften ist in EP 0 849 506 A1 beschrieben. Auf einer Schaltwelle ist verdrehfest eine Wählschwinge befestigt. An dem freien Ende der Wählschwinge ist eine Rolle angeordnet auf die ein federbelastetes Hebelsystem wirkt. Beim Schwenken der Schaltwelle werden mittels federbelasteten Hebel unterschiedliche und definierte Widerstände an der Schaltwelle gegen das Schwenken erzeugt. Die dabei entstehenden Wählkräfte sind schematisch in einem Schaltschema beschrieben. Es ist das Schaltschema für ein Sechsganggetriebe dargestellt. Drei nebeneinanderliegende Gassen sind für das Schalten der sechs Vorwärtsgänge vorgesehen. In einer vierten Gasse wird der Rückwärtsgang geschaltet. Ein in das Schaltschema skizziertes Diagramm zeigt den Verlauf der Wählkraft in Abhängigkeit des Wählweges. Eine Bewegung entlang der Abszisse zwischen den einzelnen Gassen entspricht dabei dem Schwenken der Schaltwelle. Wählkräfte werden mittels der beschriebenen Vorrichtung bei einer Bewegung aus der Neutralstellung (Schaltgasse dritter und vierter Gang) nach rechts in die Schaltgasse des fünften und sechsten Ganges sowie aus der Neutralstellung heraus nach links in die Schaltgasse des ersten und zweiten Ganges hinein und darüber hinaus beim Einwählen in die Gasse des Rückwärtsganges erzeugt. Beim Einwählen in die Gasse des Rückwärtsganges steigt die Wählkraft sprungartig an und signalisiert dem Bediener das Wählen des Rückwärtsganges. Der Bediener wird mittels der am Schalthebel deutlich ansteigenden Schaltkraft beim Anwählen der Gasse des Rückwärtsganges informiert, dass er im Begriff ist, den Rückwärtsgang einzulegen. Die Orientierung des Bedieners über die Stellung des Schalthebels zu dem Getriebe ist damit erleichtert. Das mit der ansteigenden Wählkraft abgegebene Signal an den Bediener wird insbesondere genutzt, um den Bediener vor unbeabsichtigten Wechseln aus einer Gasse für die Vorwärtsgänge in die Gasse für den Rückwärtsgang zu warnen. Diese sogenannte Schlagsperre wirkt bei unbeabsichtigtem Wählen aber auch bei beabsichtigtem Wählen Gasse des Rückwärtsganges. Die Wählkraft ist in dem Moment wesentlich höher als die Kräfte, die beim Wählen der Gassen der Vorwärtsgänge am Schaltknauf auftreten. Nach dem Überwinden der erhöhten Wählkraft sinkt die Betätigungskraft wieder auf ein normales Niveau.

Nachteilig an derartigen Vorrichtungen ist, dass aufgrund der vielen einzelnen Teile der Aufwand für die Montage des Getriebes relativ hoch ist.

Die Vorrichtung zum Erhöhen der Wahlkraft ist in Schaltvorrichtungen zum Schalten von Gangrädern mittels eines Schalthebels eingesetzt. Eines oder zwei auf einer Getriebewelle liegende wahlweise schaltbare Gangräder sind jeweils einer Gasse zugeordnet. Durch die Schaltvorrichtung sind mehrere Gangräder schaltbar. Mindestens ein Gangrad oder maximal zwei Gangräder sind einer Gasse zugeordnet. Jedes Gangrad ist nur in seiner vorbestimmten Gasse schaltbar.

Der Schalthebel ist mittels einer Lageranordnung zu einem Gehäuse schwenkbar angeordnet. Die Lageranordnung ermöglicht Schwenkbewegungen des Schalthebels in einer Wählebene und in einer quer zur Wählebene ausgerichteten Schaltebene. Während der Wähl- und Schaltvorgänge ist der Schalthebel mittels einer Kulisse geführt.

Der Schalthebel steht in der Wählebene in einer Neutralstellung und ist in der Wählebene aus der Neutralstellung durch die Wahl von Gassen wahlweise in eine von mindestens zwei Ruhestellungen schwenkbar. Steht der Schalthebel in einer der Ruhestellungen, ist eine Gasse gewählt. Aus der Ruhestellung ist der Schalthebel in der Schaltebene zum Schalten eines der Gängen in eine Schaltstellung schwenkbar. Die Neutralstellung des Schalthebels ist zumeist auch eine der Ruhestellungen, aus der wahlweise einer von zwei Gängen schaltbar ist.

In den Ruhestellungen bzw. in der Neutralstellung des Schalthebels stehen Schaltschienen in einer mittleren neutralen Stellung, in welcher die mittels der Schaltschienen schaltbaren Gänge nicht geschaltet sind. Der Schalthebel ist an einem freien Ende mit einem Schaltfinger versehen. Jede der Schaltschienen weist eine Eingriffsnut bzw. ein Schaltmaul für den Eingriff des Schaltfingers auf. Durch Wählbewegungen des Schalthebels wird ein wahlweiser Eingriff in eine von mindestens zwei achsparallelen Schaltschienen vorgenommen. Der Schalthebel ist in diesen Stellungen mit einer der Schaltschienen beweglich gekoppelt.

Ein Schwenken des Schalthebels in der Schaltebene aus der Ruhestellung in die eine oder andere Richtung hat ein Verschieben der mit dem Schalthebel gekoppelten Schaltschiene zur Folge, da der Schaltfinger eine die Eingriffsnut begrenzende Flanke beaufschlagt. Einer der Schaltschiene zugeordneten Gänge wird durch das Verschieben der Schaltschiene eingelegt.

Der Schalthebel ist zu einem fahrzeugfesten Gehäuse mittels eines kardanisch ausgeführten Gelenkes schwenkbar aufgenommen. Dieses Gelenk bzw. diese Lageranordnung sieht eine kastenförmig ausgebildete Konsole vor. Die Konsole nimmt den Schalthebel auf und ist mittels des Schalthebels um eine quer zur Schwenkachse ausgerichtete Kippachse an dem zu fahrzeugfesten Gehäuse schwenkbar gelagert. Die Kippachse fluchtet mit der Mittenachse von wahlweise einem oder zwei Kippbolzen. Die Kippbolzen lagern die Konsole in der Wählebene, jedoch nicht in der Schaltebene, schwenkbar an dem Gehäuse. Der Schalthebel ist in der Wählebene, in der Konsole unbeweglich, mit der Konsole um die Kippachse schwenkbar. Bei einer Wählbewegung an dem Schaltfinger nimmt der um die Kippachse schwenkende Schalthebel die Konsole mit. Der Schaltfinger ist an der zum Schaltangriff (Schaltknauf) entgegengesetzten Seite der Kippachse am Schalthebel angeordnet und schwenkt mit dem Schalthebel in der Wählebene um die Kippachse.

Die Lageranordnung sieht weiterhin eine schwenkbare Lagerung des Schalthebels in der Schaltebene um eine Schwenkachse in der Konsole vor. Die Schwenkachse verläuft quer zur Kippachse. Die Schwenkachse ist gleichzeitig die Mittenachse von einem in der Konsole angeordneten Schwenkbolzen. Der Schalthebel ist um den Schwenkbolzen in der Schaltebene, jedoch nicht in der Wählebene, an der Konsole gelagert. Der Schaltfinger ist am entgegensetzten Ende des Schalthebels zu der Schwenkachse angeordnet sowie in der Schaltebene, jedoch nicht in der Wählebene, um die Schwenkachse schwenkbar in der Konsole gelagert. Die Schwenkachse und die Kippachse liegen sich kreuzend in einer gemeinsamen Ebene.

Diese an sich zufriedenstellende Lösung hat den Nachteil, dass aufgrund der in einer Ebene liegenden Schwenk- und Kippachse des Schalthebels der Abstimmung von Schaltkräften und Schaltwegen Grenzen gesetzt sind. Unter Schaltkräften sind die Kräfte zu verstehen, die am Kraftangriff durch den Bediener (Schaltknauf) am Schalthebel beim Wählen und Schalten spürbar sind. Der Schalthebel legt beim Wählen und Schalten an seinem Kraftangriff definierte Wege zurück. Damit legt auch jeder weitere Punkt an dem Hebel zwischen dem Kraftangriff und der Schwenk- bzw. Kippachse definierte durch seinen Abstand zu den Achsen vorgegebene Wege zurück. Der Weg, zumeist im Bogenmaß, ist von dem Abstand des Schaltknaufs zu den Achsen abhängig. Bei gleichem Schwenkwinkel des Schalthebels um die Kippachse oder Schwenkachse liegt jeder der Punkte, unabhängig davon ob er um die Kippachse oder die Schwenkachse geschwenkt ist, gleiche Wege zurück. Der Schalthebel ist häufig durch eine zwischen dem Kraftangriff und den Achsen gelegene Schaltkulisse geführt. Der Gestaltung von material- und platzsparenden Kulissen sind aufgrund der gleichen Wege des Schalthebels in der Kulisse bei Wähl- und Schaltbewegungen häufig Grenzen gesetzt. Die Schaltkräfte am Schaltknauf sind über das Hebelverhältnis des Schalthebels beeinflussbar. Das Hebelverhältnis ergibt sich aus dem Abstand vom Knauf zu den Achsen und aus dem Abstand von den Achsen zu dem Eingriff des Schaltfingers in die Eingriffsnut der Schaltschiene. Der Länge des in den Fahrgastraum ragenden Schalthebels sind bauraumbedingt in der Regel Grenzen gesetzt. Die Länge des Schaltfingers, ausgehend von den sich kreuzenden Achsen, ist von der Lage der sich dem Schalthebel anschließenden Elemente der inneren Schaltung abhängig.

### Zusammenfassung der Erfindung

Zu dem Zeitpunkt an dem die Erfindung gemacht wurde, bestand die Aufgabe, eine einfache und kostengünstig herzustellende Vorrichtung zu schaffen, die mit wenig Aufwand in ein Getriebe integrierbar ist.

Diese Aufgabe ist nach dem Gegenstand des kennzeichnenden Teils des Anspruchs 1 dadurch gelöst, dass die Vorrichtung in einer Lageranordnung zur schwenkbaren Lagerung eines Schalthebels mittels einer Konsole in einem Gehäuse integriert ist, wobei die Lageranordnung den Schalthebel in der Konsole um eine Schwenkachse zu der Konsole schwenkbar lagert sowie den Schalthebel mit der Konsole um eine quer zur Schwenkachse ausgerichtete Kippachse schwenkbar zu dem Gehäuse lagert.

Die Vorrichtung ist zumindest aus einer zur Konsole festen Rampe und aus mindestens einer Ablaufrolle gebildet. Die Ablaufrolle ist mittels einer Feder gegen die Rampe vorgespannt. Die Rampe ist vorzugsweise aus einem gestanzten und ggf. spanlos bzw. spanend nachgearbeiteten Blech gebildet. Das Blech ist mit der Konsole verschweißt. Alternativ dazu ist vorgesehen die Rampe an einer aus Blech gebildeten Konsole direkt ausgeformt. Bei Schwenkbewegungen des Schalthebels um die Kippachse schwenkt die Rampe mit der Konsole gegen die an dem Gehäuse abgestützte Ablaufrolle. Die Ablaufrolle rollt dabei auf der Rampe ab. Über die Kraft der Feder und die Kontur der Rampe sind die Kräfte beim Wählen einer Gasse der Vorwärtsgänge und auch beim Anwählen des Rückwärtsganges steuerbar. Die Rampe steigt über wenigstens einer quer von einer gedachten Ebene abgehenden gedachten Abszisse an. Die Ebene verläuft dabei mit der Kippachse und ist so ausgerichtet, dass sie rechtwinklig von der Schwenkachse durchdrungen ist. Die Rampe steigt über der Abszisse von der Ebene weg an. Die Ablaufrolle ist drehbar um eine zum Gehäuse ortsfeste Rotationsachse gelagert. Der um die Kippachse geschwenkte Schalthebel nimmt die Konsole mit der Rampe mit. Die Rampe bewegt sich gegen die Ablaufrolle. Die Ablaufrolle steigt dabei gegen die Kraft der Feder an der Rampe auf. Die Wählkraft wird erhöht.

Für die Ausrichtung der rechtwinklig zu der Abszisse stehenden und den Anstieg beschreibenden Ordinate sind alternative Ausgestaltungen vorgesehen. Eine Ausgestaltung sieht vor, dass die Ordinate parallel zu der Kippachse mit der Ebene verläuft. Die Rampe weist von der Konsole weg. Ihre mit der Ablaufrolle in Berührung kommende Kontur entfernt sich mit zunehmendem Anstieg von der Konsole. Die Ablaufrolle wird dabei in Richtung der Konsole gegen die Rampe vorgespannt.

Die Ablaufrolle ist drehbar an einem Hebel befestigt. Der Hebel ist um einen zu dem Gehäuse festen Drehpunkt schwenkbar angeordnet. Eine oder mehrere Federn greifen von dem Drehpunkt des Hebels entfernt an dem Hebel an. Der Hebel ist mittels der Feder über die Ablaufrolle gegen die Rampe vorgespannt. Die durch den Drehpunkt des Hebels verlaufende Drehachse, um die der Hebel schwenkt, und die Rotationsachse der Rolle sind quer zur Kippachse des Schalthebels ausgerichtet und verlaufen vorzugsweise parallel zu der Wandung der Konsole. Eine gleichmäßige Kraftverteilung wird mit zwei Rampen an der Konsole erzielt. Auf jede der Rampen wirkt jeweils einer der vorher beschriebenen Hebel mit jeweils einer der Ablaufrollen. Die Hebel sind sich einander gegenüberliegend beidseitig der Konsole angeordnet. Die Hebel nehmen die Konsole mit den Rampen zwischen sich und sind gegeneinander mittels wenigstens einer Zugfeder verspannt. Die Zugfeder ist jeweils an einem dem Drehpunkt abgewandten freien Ende eines jeden der Hebel eingehängt. Eine gleichmäßige Kraftverteilung und ein Bewegungsausgleich zwischen den Hebeln ist abgesichert.

Alternativ zu der vorgenannten Ausrichtung der Ordinate sieht eine Ausgestaltung der Vorrichtung vor, dass die den Verlauf der Kontur beschreibende Ordinate senkrecht zu der Kippachse ausgerichtet ist und gleichzeitig mit der Ebene verläuft. Die Ordinate verläuft vorzugsweise parallel zu einer der Wandungen der Konsole und schneidet die Kippachse. Die Rampe ist deshalb durch die Ablaufrolle entweder in Richtung der Kippachse des Schalthebels oder aus der Richtung der Kippachse des Schalthebels mittels der Ablaufrolle belastet. Die Ablaufrolle wiederum ist drehbar an einem Hebel befestigt. Der Hebel ist um einen zu dem gehäusefesten Drehpunkt schwenkbar. Wenigstens eine aber auch mehrere von dem Drehpunkt entfernt an dem Hebel angreifende Federn spannen den Hebel über die Ablaufrolle gegen die Rampe von der Kippachse wegweisend oder zu der Kippachse hinweisend vor. Die durch den Drehpunkt verlaufende Drehachse des Hebels und die Rotationsachse der Rolle sind parallel zu der Kippachse des Schalthebels ausgerichtet. Für diese Ausführungsvariante ist wiederum vorgesehen, dass an der Konsole zwei Rampen angeordnet sind. Die Rampen sind an zwei voneinander weg und nach außen weisenden Wandabschnitten der Konsole befestigt bzw. ausgebildet. Auf jede der Rampen wirkt jeweils einer der Hebel mit jeweils einer der Ablaufrollen. Jeder der Hebel ist mittels jeweils mindestens einer sich zu dem Gehäuse abstützenden Feder über eine der Ablaufrollen gegen die Rampe vorgespannt.

Es ist mit einer weiteren Ausgestaltung der Erfindung vorgesehen, dass die Rampe ausgehend von dem in der Ebene liegenden Koordinatenursprung des durch die Abszisse sowie Ordinate gebildete Koordinatensystems über einer ersten Abszisse sowie über eine entgegengesetzt zu der ersten Abszisse gerichteten zweiten Abszisse beidseitig von der Ebene weg ansteigt. Der in der Neutralstellung stehende Schalthebel steht senkrecht in der Konsole. Dabei verläuft die Mittenachse des Schalthebels mit der von der Kippachse ausgehenden Ebene. Die Rampe steigt beidseitig der Ebene von dem Koordinatenursprung ausgehend sowie von der Ebene weg an. Die in der Neutralstellung auf Höhe des Koordinatenursprungs an der Rampe anliegende Ablaufrolle ist mittels der absteigenden Flanken gegenüber dem Koordinatenursprung zentriert. Die auf den Hebel wirkende Federkraft zwingt die Ablaufrolle in diese Vertiefung an der Rampe und hält damit die Konsole in der Neutralstellung des Schalthebels mittels der Kraft der Feder arretiert. Der Verlauf der Rampe kann von einer Seite der Ebene zu der anderen Seite der Ebene spiegelbildlich gestaltet sein oder von einer Seite der Ebene zu der anderen Seite der Ebene unterschiedliche Anstiege aufweisen. Wählkräfte sind zusätzlich über die Anzahl, Federkennlinie und die Hebelverhältnisse an den Hebeln fein abstimmbar.

Einen wesentlichen Einfluss auf die Wählkraft an dem um die Kippachse schwenkenden Schalthebel hat der Anstieg der Rampe. Für das Anwählen der Gassen der Vorwärtsgänge in einem mehrgängigen Getriebe ist zunächst ein flacher Anstieg der Rampe zu beiden Seiten der Ebene vorgesehen. Auf diesem Teil der Rampe rollt die Ablaufrolle ab, wenn der Schalthebel die Kippachse wahlweise in die eine oder andere Schwenkrichtung zum Anwählen einer der Gassen der Vorwärtsgänge geschwenkt wird. Die Gegenkraft an dem Schalthebel nimmt mit zunehmenden Schwenkwinkel des Schalthebels nur geringfügig zu. Zur Wahl der Gasse des Rückwärtsganges wird der Schalthebel in eine Schwenkrichtung über seine Position zu einer Gasse mit Vorwärtsgängen hinaus in die Gasse des Rückwärtsganges geschwenkt. Die Konsole schwenkt mit dem Schalthebel dabei weiter mit und somit auch die Rampe. Der flach ansteigenden Rampe schließt sich ein Abschnitt an der Rampe an, der stark abgeknickt von der Abszisse weg ansteigt. Wenn der Schalthebel seine Position vor der Gasse des Rückwärtsganges erreicht, trifft die Rolle auf den Abschnitt an der Rampe mit dem steilen Anstieg. Der Hebel wird mittels der auf der steil ansteigenden Rampe aufsteigenden Ablaufrolle gegen die Kraft der Feder bewegt. Die Gegenkraft an der Konsole und somit an dem Schalthebel steigt sprungartig an. Dem Bediener wird mittels dieses Kraftanstieges an dem Schaltknauf signalisiert, dass er im Begriff ist in die Gasse des Rückwärtsganges einzuwählen.

Die Konsole ist mittels des Schalthebels um eine quer zur Schwenkachse ausgerichtete Kippachse an einem zum Fahrzeug festen Gehäuse schwenkbar gelagert. Die Kippachse fluchtete mit der Mittelachse von wahlweise einem oder zwei Kippbolzen. Die Kippbolzen lagern die Konsole in der Wählebene, jedoch nicht in der Schaltebene, schwenkbar an dem Gehäuse. Der Schalthebel ist in der Wählebene, zur Konsole unbeweglich, mit der Konsole um die Kippachse schwenkbar. Bei einer Wählbewegung an dem Schaltfinger nimmt der um die Kippachse schwenkende Schalthebel die Konsole mit. Der Schaltfinger ist an einer zum Schaltangriff wegweisenden Seite, vorzugsweise an der entgegengesetzten Seite, der Kippachse am Schalthebel angeordnet und schwenkt mit dem Schalthebel in der Wählebene um die Kippachse.

Die Lageranordnung sieht weiterhin die schwenkbare Lagerung des Schalthebels in der Schaltebene um eine Schwenkachse in der Konsole vor. Die Schwenkachse verläuft quer zur Kippachse. Die Schwenkachse fluchtet mit den Zentren von sich zwei in der Konsole gegenüberliegenden Lageraugen oder wahlweise mit einem in der Konsole ausgebildeten Lagerauge. Der Schalthebel ist dabei um einen in dem/den Lagerauge(n) gelagerten Schwenkbolzen in der Schaltebene, jedoch nicht in der Wählebene, schwenkbar an der Konsole gelagert. Der Schaltknauf und der Schaltfinger weisen jeweils in eine andere Richtung von der Schwenkachse weg. Bei den Schaltbewegungen ist der Schalthebel über den Schaltfinger mit einer der Eingriffsnuten einer Schaltschiene beweglich gekoppelt. Die Schaltbewegung bewirkt das Verschieben der Schaltschiene. Der Schaltfinger beaufschlagt dabei eine der in Verschieberichtung der Schaltschiene liegenden Flanke der Eingriffsnut. Einer der Schaltschiene zugeordneten Gänge wird durch das Verschieben der Schaltschiene eingelegt.

Die Schwenkachse und die Kippachse liegen erfindungsgemäß horizontal auf unterschiedlichen und vertikal, je nach Ausführung der Lageranordnung, in einer gemeinsamen oder in unterschiedlichen Ebenen. Die Schwenkachse und die Kippachse liegen dabei zwischen dem Kraftangriff am Schaltknauf und dem Schaltfinger. Schwenkbewegungen um die dem Schaltfinger am nächsten liegende der Achsen resultieren am Schaltknauf sowie an jedem der sich in Richtung dieser Achse an dem Schaltknauf anschließenden Punkte des Schalthebels in einem längeren zurückgelegten Weg im Bogenmaß, wenn die Schaltvorrichtung sowohl die Wähl- als auch die Schaltbewegungen auf einen gleichen Schwenkwinkel begrenzt.

Mit einer Ausgestaltung der Erfindung ist vorgesehen, dass die Kippbolzen drehfest in dem Gehäuse aufgenommen sind. Die Konsole ist um die Kippbolzen schwenkbar. In jedem der Lageraugen der Konsole ist ein Gleitlager zwischen dem Kippbolzen und der Konsole angeordnet. Alternativ dazu sitzt der Kippbolzen ohne gesonderte Lagerung passgenau in dem Lagerauge der Konsole. Der Schalthebel ist entweder schwenkbar um den zur Konsole bewegungsfesten Schwenkbolzen gelagert oder der Schwenkbolzen sitzt fest in dem Schalthebel und bewegt sich in Lageraugen der Konsole. Alternativ sind die Lagerungen des Schalthebels auf dem Schwenkbolzen oder die Lagerungen des Schwenkbolzens in der Konsole mit Gleitlagern versehen.

Die Lageranordnung für den Schalthebel gemäß Erfindung weist mit der Vorrichtung zum Erhöhen der Wählkraft, der Rastiereinrichtung und der Sperreinrichtung Elemente auf, die üblicherweise von einer Lageranordnung des Schalthebels getrennt in dem Getriebe angeordnet sind. Es ist mit der Erfindung eine raumsparende sowie einfach herzustellende Schalteinrichtung geschaffen. Die Lageranordnung des Schalthebels ist als Modul vormontierbar, wobei die Konsole des Schalthebels vorwiegend die Basis für die Befestigung weiterer Elemente des Schaltgetriebes ist.

### Kurze Beschreibung der Zeichnungen

Die Erfindung wird nachfolgend anhand von Ausführungsbeispielen näher erläutert. Es zeigen:

Figuren 1 bis 9 ein Ausführungsbeispiel einer Lageranordnung gemäß Erfindung in verschiedenen Ansichten und Schnittdarstellungen. Im Einzelnen zeigt:
- Figur 1: eine Gesamtansicht der Lageranordnung,
- Figur 2: einen Längsschnitt durch die Lageranordnung,
- Figur 2a: das Schaltschema der Stellungen des Schalthebels,
- Figur 3: einen Querschnitt der Lageranordnung,
- Figur 4: eine schematische Darstellung der Lage der Kippachse und der Schwenkachse zu dem Schalthebel,
- Figur 5: einen Längsschnitt durch die Lageranordnung mit dem um die Kippachse in eine Wählrichtung geschwenkten Schalthebel,
- Figur 6: einen Querschnitt durch die Vorrichtung mit dem um die Schwenkachse in eine Schaltstellung geschwenkten Schalthebel,
- Figur 7: eine Gesamtansicht der Lageranordnung ohne das Gehäuse,
- Figur 8a: eine Ansicht der Lageranordnung von unten in der Neutralstellung des Schalthebels,
- Figur 8b: eine Ansicht der Lageranordnung von unten mit dem in die Gasse des Rückwärtsganges geschwenkten Schalthebel und
- Figur 9: eine Seitenansicht der Lageranordnung mit dem Sperrfinger und
- Figur 10: ein weiteres Ausführungsbeispiel einer erfindungsgemäßen Lageranordnung ohne Gehäuse.

### Detaillierte Beschreibung der Zeichnungen

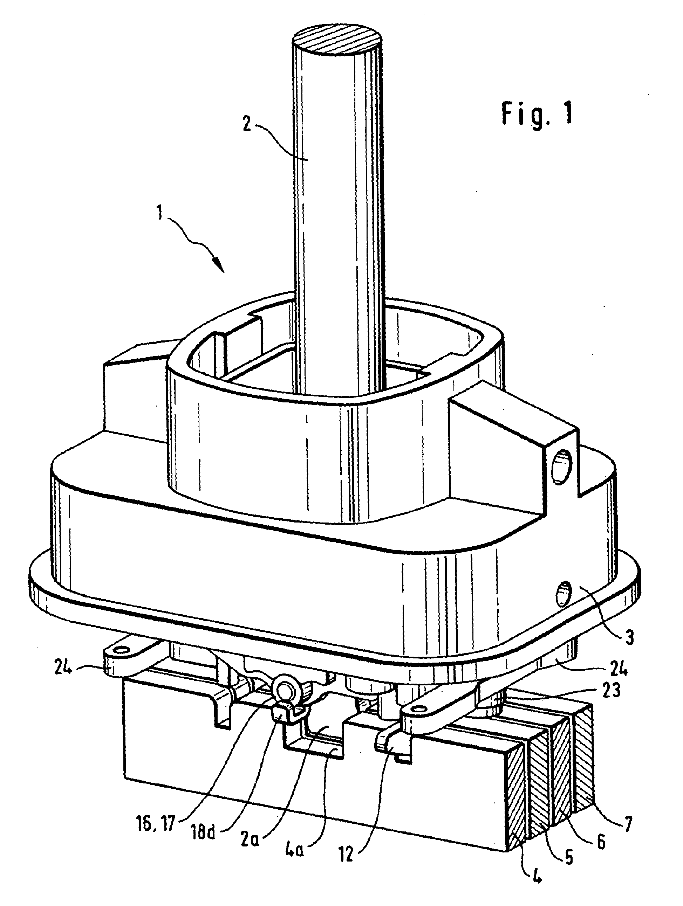

Figur 1 zeigt eine Gesamtansicht eines Ausführungsbeispieles einer Lageranordnung 1. In der Lageranordnung 1 ist ein Schalthebel 2 gelagert. Die Lageranordnung 1 ist in einem Gehäuse 3 aufgenommen. Der Schalthebel 2 wirkt mit einem Schaltfinger 2a wahlweise auf Schaltschienen 4, 5, 6 und 7. Die Schaltschienen 4, 5, 6 und 7 sind jeweils mit einer Eingriffsnut 4a, 5a, 6a, 7a versehen, in die der Schalthebel 2 in Abhängigkeit von seiner Wählposition eingreift.

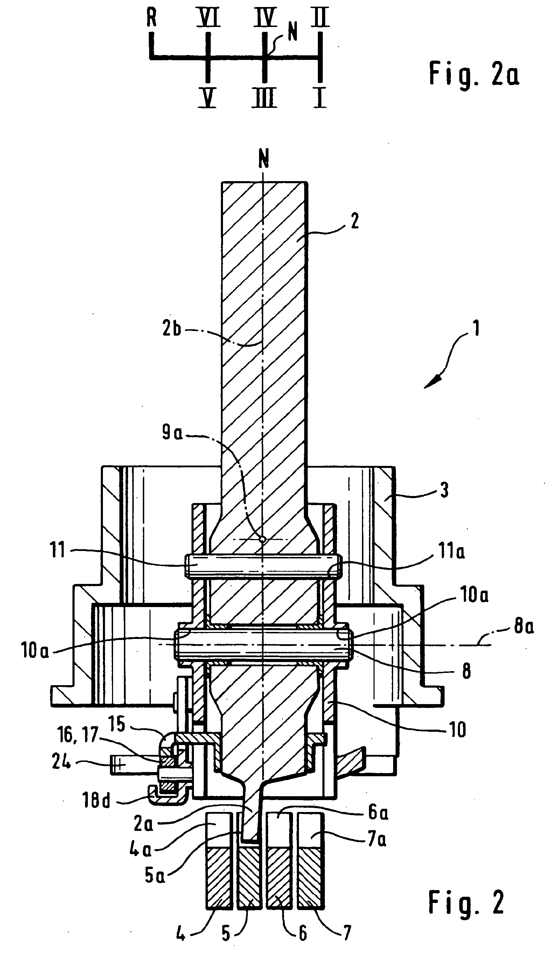

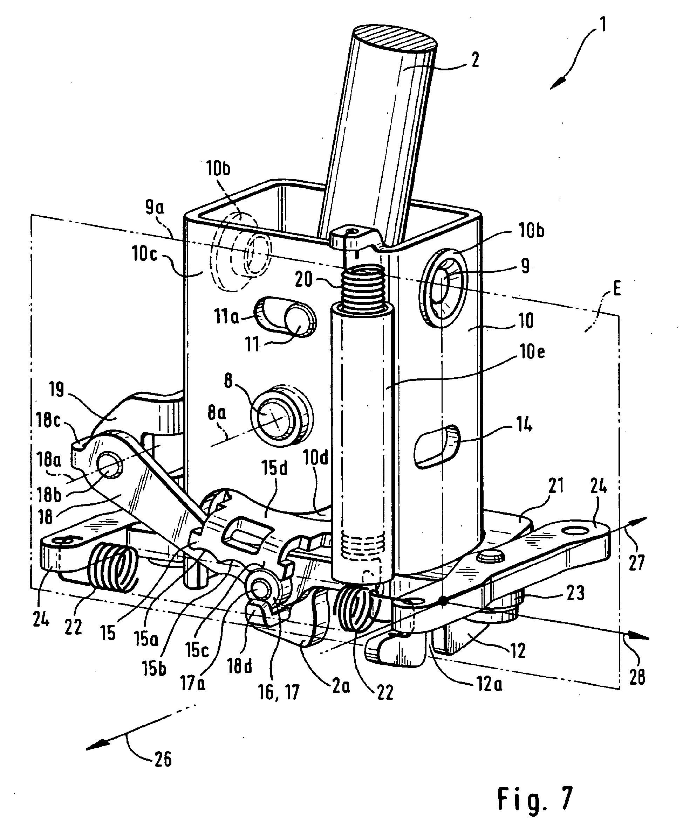

In Figur 2 ist die Lageranordnung 1 geschnitten dargestellt. Der Schalthebel 2 steht in der Neutralstellung N. Der Schaltfinger 2a verläuft leicht zu der in der Neutralstellung stehenden Mittelachse 2b des Schaltfingers 2 abgewinkelt und greift in die Eingriffsnut 5a der Schaltschiene 5 ein. Die Schaltschienen 4, 5, 6 und 7 stehen in einer neutralen Mittelstellung. In dieser neutralen Mittelstellung sind die Eingriffsnuten 4a, 5a, 6a und 7a in Schwenkrichtung des Schalthebels 2 hintereinander sowie zueinander ausgerichtet. Der Schalthebel 2 ist aus der neutralen Stellung N um die senkrecht zu der Darstellung verlaufende Kippachse 9a schwenkbar in der Lageranordnung 1 angeordnet. Der Schaltfinger 2a ist beim Schwenken des Schalthebels 2 um die Kippachse 2a innerhalb der Eingriffsnuten 4a, 5, 6a und 7a frei beweglich schwenkbar. Der Schalthebel 2 ist in einer Konsole 10 auf einem Schwenkbolzen 8 um die Schwenkachse 8a schwenkbar gelagert. Der Schwenkbolzen 8 sitzt fest in Lageraugen 10a der Konsole 10. In dem Schalthebel 2 ist weiterhin ein Anschlag 11 in Form eines Stiftes befestigt. Mit dem Anschlag 11 wird der Schwenkwinkel des Schalthebels 2 um die Schwenkachse 8a in einem sich in Schwenkrichtung erstreckendem Langloch 11a begrenzt (siehe auch Figur 7).

Aus der neutralen Stellung N ist der Schalthebel 2 um die Schwenkachse 8a mit dem Schaltfinger 2a schwenkbar. Der Schaltfinger 2a beaufschlagt dabei eine in Schwenkrichtung liegende Flanke der Eingriffsnut 5a. Die Schaltschiene 5 ist einer Gasse zugeordnet, aus der der dritte und vierte Gang durch Schwenken des Schalthebels 2 schaltbar sind. Figur 2a zeigt das Schaltschema zu den Wähl- oder Schaltstellungen des Schaltknaufes 2c. Aus der Gasse III-IV ist der Schalthebel 2 um die Kippachse 9a in Richtung der Gasse I-II schwenkbar. In der Gasse I-II greift der Schaltfinger 2a in die Schaltschiene 4 ein. Mit der Schaltschiene 4 ist der erste oder zweite Gang mittels des um die Schwenkachse 8a schwenkenden Schalthebels 2 schaltbar. Der um die Kippachse 9a in die Gasse VI-V geschwenkte Schaltfinger 2a greift in die Schaltschiene 6 ein. Mit einem Schwenken des Schalthebels 2 um die Schwenkachse 8a ist wahlweise der vierte oder fünfte Gang schaltbar. Bei einer Schwenkbewegung des Schalthebels um die Kippachse 9a über die Gasse VI-V hinaus wird die Gasse des Rückwärtsganges R angewählt. Der Schaltfinger 2a greift dabei in die Eingriffsnut 7a der Schaltschiene 7 ein. Durch Schwenken des Schalthebels 2 um die Schwenkachse 8a ist der Rückwärtsgang aus dieser Position schaltbar.

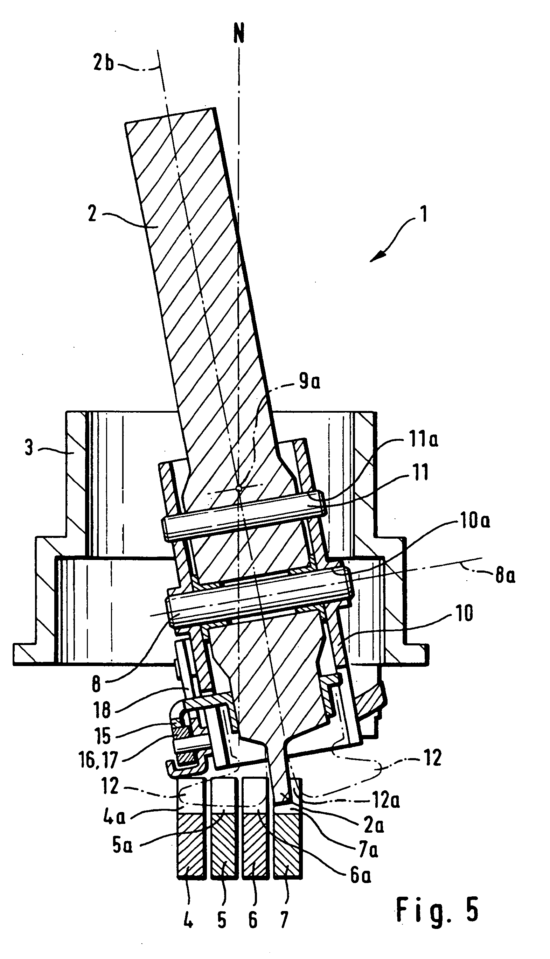

In Figur 5 zeigt den gleichen Schnitt wie in Figur 2. Der Schalthebel 2 ist jedoch durch Schwenken um die Kippachse 9a in die Gasse des Rückwärtsganges R bewegt. Der Schaltfinger 2a greift dazu in die Eingriffsnut 7a der Schaltschiene 7 ein. Aus dieser Position ist der Schalthebel 2 um die Schwenkachse 8a schwenkbar. Der mit dem Schalthebel 2 schwenkende Schaltfinger 2a nimmt dabei die Schaltschiene 7 in ihrer Längsrichtung mit, bis der Rückwärtsgang R eingelegt ist.

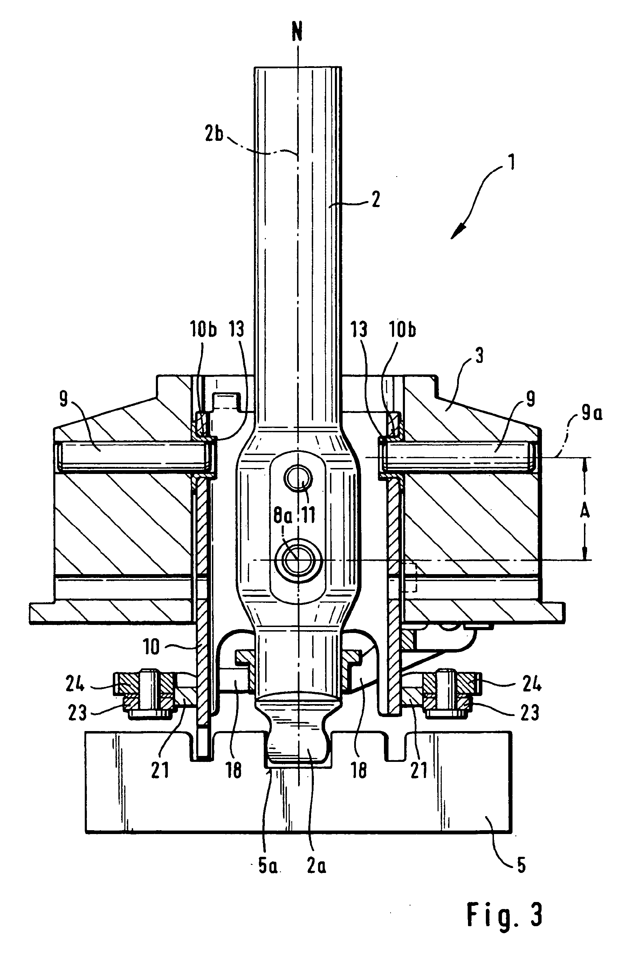

Figur 3 zeigt einen Querschnitt der Lageranordnung 1. Der Schalthebel 2 steht in der Neutralstellung und greift mit seinem Schaltfinger 2a in die Schaltschiene 5 ein. In dieser Ansicht ist die Schaltschiene 4 durch die Schaltschiene 5 verdeckt. Der Schaltfinger ist über den Eingriff in die Eingriffsnut 5a formschlüssig mit der Schaltschiene 5 gekoppelt. Aus der Neutralstellung ist der Schalthebel 2 um die Kippachse 9a und die Schwenkachse 8a schwenkbar. Die Kippachse 9a ist die Mittellinie von zwei Kippbolzen 9. Die Kippbolzen 9 sind in dem Gehäuse 3 fest angeordnet und greifen jeweils in ein Lagerauge 10b der Konsole 10. Die Konsole 10 ist durch den Schalthebel 2 mittels Gleitlagern 13 in dem Lagerauge 10b auf dem Kippbolzen 9 gelagert. Die Schwenkachse 8a und die Kippachse 9a verlaufen mit dem Abstand A zueinander beabstandet sowie quer zueinander. Dabei liegt die Schwenkachse 8a dem Schaltfinger 2a am nächsten.

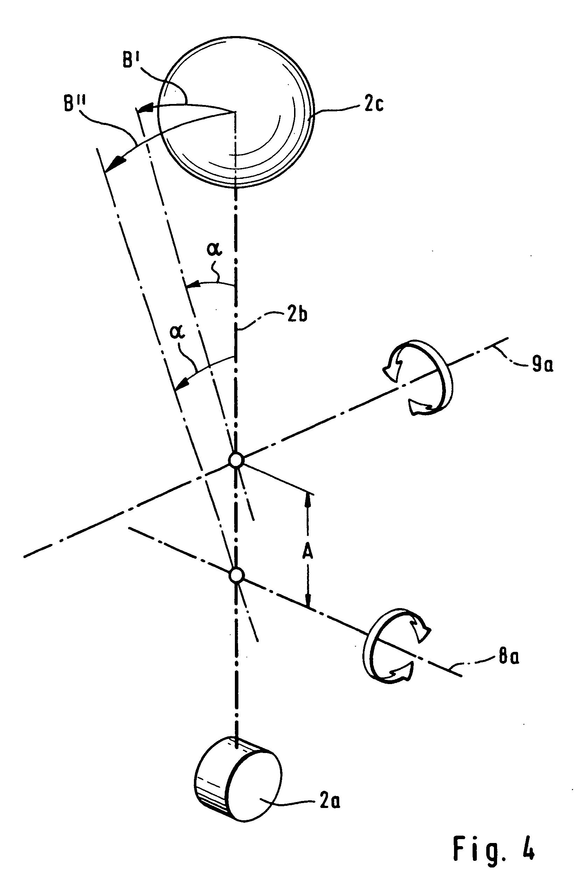

Figur 4, eine schematischen Darstellung des Schalthebels 2 mit den Achsen 8a, 9a zeigt, dass mittels der zueinander um den Abstand A beabstandeten Achsen 8a, 9a unterschiedliche Wähl- und Schaltwege am Schaltknauf 2c des Schalthebels erzielt werden. Der Schaltknauf 2c legt bei einem um die Kippachse 9a mit dem Schwenkwinkel α geschwenkten Schalthebel 2 den Weg B' im Bogenmaß zurück. Wenn der Schalthebel 2 um die Schwenkachse 8a mit dem gleichen Winkel α geschwenkt wird, legt der Schaltknauf 2c den Weg B" im Bogenmaß zurück. B" ist aufgrund des Abstandes A zwischen der Achse 8a und der Achse 9a größer als B'.

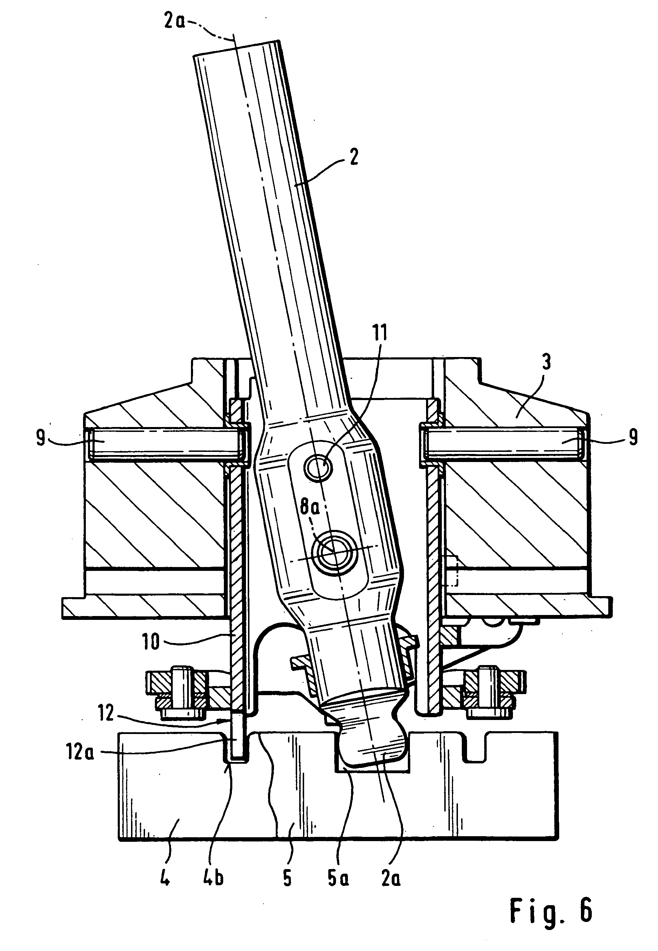

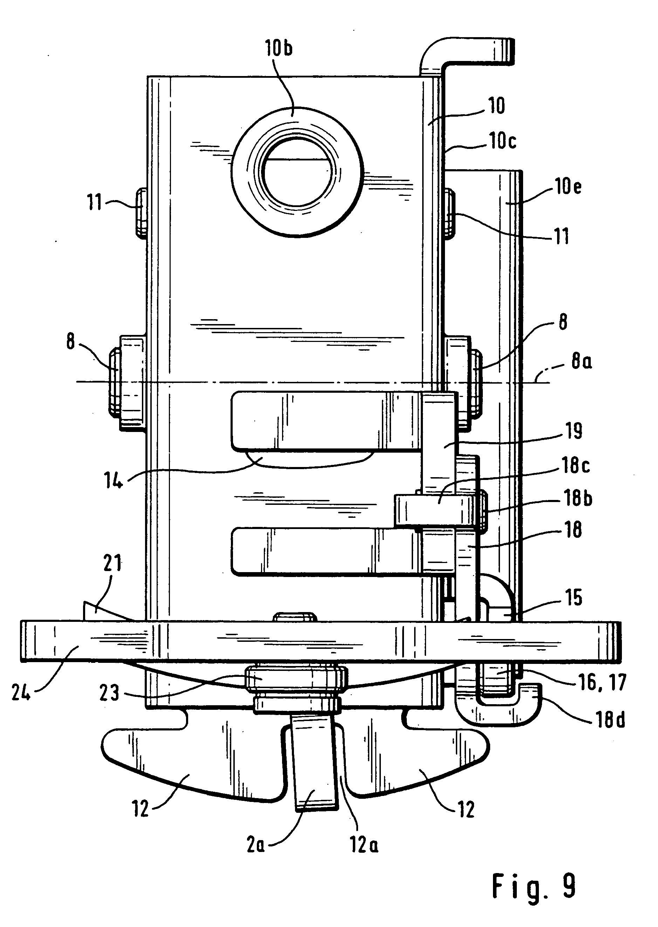

Figur 6 zeigt die Lageranordnung 1 in der gleichen Schnittdarstellung wie in Figur 3. Der Schalthebel 2a ist um die Schwenkachse 8a in eine Schaltstellung geschwenkt und hat dabei mittels des Schaltfingers 2a die Schaltschiene 5 in ihre Längsrichtung verschoben. Die Schaltschiene 4 verbleibt dabei unverändert in ihrer Position. In dieser Position ist die Schaltschiene 4 mittels eines Sperrfingers 12 an der Konsole 10 festgesetzt. Der Sperrfinger 12 greift dazu in einen Schlitz 4b an der Schaltschiene 4. In Figur 5 ist der Sperrfinger 12 in einer Vorderansicht zumindest teilweise dargestellt. Der Sperrfinger 12 ist mittels einer Freimachung 12a geteilt. Durch die Freimachung 12a ist die Schaltschiene 5 in der nach Figur 6 dargestellten Anordnung berührungslos zu dem Schaltfinger 12 hindurch verschiebbar. Wie aus der Ansicht in Figur 5 ersichtlich ist, schwenkt der Sperrfinger 12 mit dem Schaltfinger um die Kippachse 9a, wenn mit dem Schalthebel 2 eine der Gassen gewählt wird. In Figur 5 gibt der Sperrfinger 12 mittels der Freimachung 12a die Schaltschiene 7 für das Schalten des Rückwärtsganges und in Figur 6 die Schaltschiene 5 für das Schalten eines der Schaltschiene 5 zugeordneten Gänge frei. Figur 9 zeigt die Konsole 10 mit dem Sperrfinger 12 ohne die Schaltschienen. Die Schaltfinger 2a ist in Richtung der Freimachung 12a um die Schwenkachse 8a schwenkbar, so dass jede der mit dem Schaltfinger 2a im Eingriff stehende Schaltschiene zu dem Sperrfinger 12 berührungslos durch die Freimachung 12a verschiebbar ist.

Figur 7 zeigt die Lageranordnung 1 ohne das Gehäuse 3. Die Konsole 10 ist aus einem Profil gefertigt bzw. aus einem Blech zu einem Profil gebogen. In die Konsole sind Langlöcher 11a und 14 eingebracht. In das Langloch 11a greift, wie anfangs schon beschrieben, der Anschlag 11 ein. Der Anschlag 11 geht von dem Schalthebel 2 aus. Mittels des Anschlages 11 in dem Langloch 11a ist der Schwenkwinkel des Schalthebels 2 um den Schenkbolzen 8 in der Konsole 10 begrenzt. Der Anschlag 11 liegt an jeweils einem Ende des Langloches 11a an, wenn ein Gang geschaltet ist. In das Langloch 14 greift ein von dem Gehäuse 3 ausgehender und nicht dargestellter Anschlag ein. Mittels des Anschlages in dem Langloch 14 ist die Schwenkbewegung der Konsole 10 zu dem Gehäuse um den Kippbolzen 9 begrenzt.

Die Lageranordnung 1 weist eine Rastkontur 15 mit Rastvertiefungen 15a, 15b und 15c auf. Die Rastkontur 15 ist aus Blech ausgeformt. Das Blech ist winkelförmig abgebogen und mittels einer von der Rastkontur 15 abgehenden Verlängerung 15d an dem Schalthebel 2 befestigt. Die Verlängerung 15d durchgreift dabei eine von der Schwenkachse 8a des Schalthebels 2 durchdrungene Wand 10c der Konsole 10 an einer Öffnung 10d der Wand. Gegen die Rastkontur 15 ist ein Rastelement 16 vorgespannt. Das Rastelement 16 ist eine Rolle 17. Die Rolle 17 sitzt drehbar auf einem Bolzen 17a. Der Bolzen 17a ist an einem Kipphebel 18 befestigt. Der Kipphebel 18 ist um den Kipppunkt 18a auf einem Bolzen 18b schwenkbar befestigt. Der Bolzen 18b ist an einem mit der Kippachse 9a gleichgerichteten und von der Rotationsachse der Rolle 17 wegweisenden Vorsprung 19 befestigt. Der Kipphebel 18 ist aus Blech gebildet und weist ein hakenförmiges Ende 18c auf. Das hakenförmige Ende 18c hintergreift den Vorsprung 19 an einer von dem Kipphebel 18 abgewandten Seite. Damit ist der Kipphebel 18 auf dem Bolzen 18b axial an dem Vorsprung 19 gesichert. Die um ihre Rotationsachse an dem Kipphebel 18 beweglich gelagerte Rolle 17 ist mittels eines weiteren hakenförmigen Endes 18d an dem Kipphebel 18 gesichert. Dabei hintergreift das hakenförmige Ende 18d die Rolle 17 an einer von dem Kipphebel 18 abgewandten Seite.

Der Kipphebel 18 ist an einem dem Kipppunkt 18a abgewandten Ende mit einer Feder 20 belastet. Die Feder 20 ist eine Zugfeder und ist mir ihrem einen Ende an dem Kipphebel 18 sowie mit dem anderen Ende an der Konsole 10 eingehängt. Die Feder 20 zieht den Kipphebel 18 mit der Rolle 17 gegen die Rastkontur 15 und ist dabei in einer Hülse 10e an der Konsole 10 geführt. Der Schalthebel 2 steht in Figur 7, um die Schwenkachse 8a geschwenkt, in einer geschalteten Stellung. Der Anschlag 11 liegt an einem Ende des Langloches 11a an. In dieser Stellung ist die Rolle 17 in der Rastvertiefung 15c eingerastet und arretiert den Schalthebel 2 in seiner Stellung. Wird der Schalthebel 2 gegensinnig zu seiner jetzigen Schwenkstellung um die Schwenkachse 8a geschwenkt, steigt die Rolle 17 aus der Rastvertiefung 15c auf und verrastet zunächst in der Rastvertiefung 15b. In dieser Stellung steht der Schalthebel 2 entweder in der Neutralstellung oder in einer der Ruhestellungen der Gassen vor dem Schalten eines Ganges. Wird der Rasthebel 2 in diese Richtung weiter geschwenkt, verrastet die Rolle 17 schließlich in der Rastvertiefung 15a und arretiert den Schalthebel 2 in einer weiteren Schaltstellung.

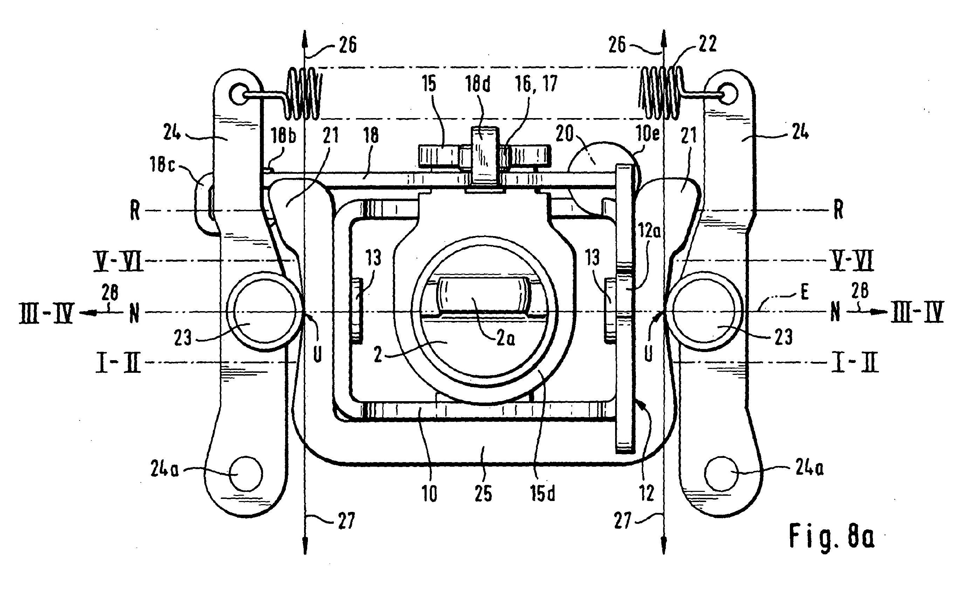

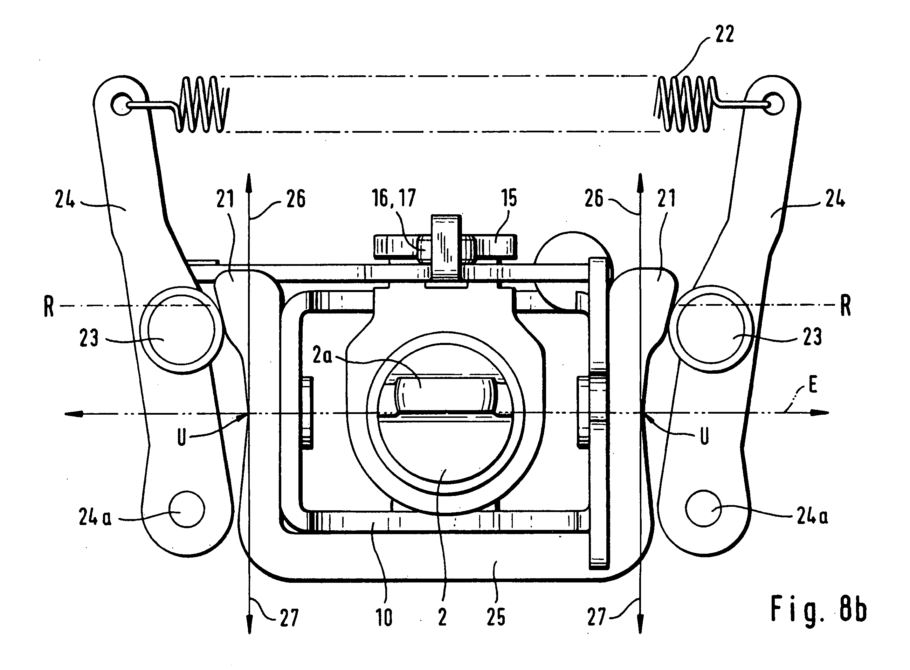

Die Lageranordnung 1 weist eine Vorrichtung zum Erhöhen von Wählkräften auf. Wie aus den Figuren 8a und 8b zu entnehmen ist, ist die Vorrichtung aus zwei Rampen 21, jeweils einer gegen die Rampe mittels einer Feder 22 vorge-5 spannten Ablaufrolle 23 sowie zwei Hebeln 24 gebildet. Die Rampen 21 sind an einem bügelförmigen Blech 25 ausgebildet. Das Blech 25 ist an der Konsole 10 befestigt. Die Hebel 24 sind jeweils um einen zum nicht dargestellten Gehäuse festen Drehpunkt 24a in Richtung der Konsole 10 schwenkbar angeordnet. Jede der Ablaufrollen 23 ist drehbar an einem der Hebel 24 angeordnet. Die Zugfeder 22 ist jeweils mit einem ihrer Enden an einem zu dem Drehpunkt 24a entgegengesetzten Ende des Hebels 24 eingehakt. Die Hebel 24 sind mittels der Zugfeder gegeneinander und somit gegen'die Konsole 10 vorgespannt. Dabei wird jeweils eine der Rollen 23 über die Hebel 24 gegen jeweils eine der Rampen 21 gezogen.

Die Rampen 21 sind in Abschnitte unterschiedlichen Anstieges eingeteilt und weisen zueinander die gleiche Rampenkontur auf. Die Kontur einer jeden Rampe 21 steigt über zwei in entgegengesetzte Richtung weisenden Abszissen 26, 27 von einem Koordinatenursprung U ausgehend an. Die Abszissen 26 und 27 gehen quer von einer gedachten Ebene E ab und sind somit parallel zur Schwenkachse 8a des Schalthebels 2 ausgerichtet (Figur 7, Figur 8a, Figur 8b). Die Ebene E verläuft mit der Kippachse 9a des Schalthebels 2 und ist rechtwinklig von der Schwenkachse 8a des Schalthebels 2 durchdrungen. Der Koordinatenursprung U liegt in der Ebene E. Ein um die Kippachse 9a geschwenkter Schalthebel 2 schwenkt die Konsole 10 mit der Rampe 21 gegen die in Schwenkrichtung feste Ablaufrolle 23. Die Kontur der Rampen 21 bewegt sich in Schwenkrichtung zu der Rotationsachse der Ablaufrolle 23, wodurch die gegen die Rampe 21 vorgespannte jeweilige Ablaufrolle 23 an der Rampe 21 aufsteigend abrollt. Die rechtwinklig zu den Abszissen 26 und 27 ausgerichtete Ordinate 28 verläuft parallel zu der Kippachse 9a mit der Ebene E.

Da die Rampe 21 beidseitig des Koordinatenursprungs U von der Ebene E weg ansteigt, zentriert sich jeweils eine Rolle 23 an einer Rampe 21 in der Neutralstellung **N** des Schalthebels an dem Koordinatenursprung U. Die Rampe 21 verläuft sowohl über der Abszisse 26 als auch über der Abszisse 27 anfangs flach ansteigend. Die an den Abschnitten mit dem flachen Anstieg aufsteigenden Ablaufrollen 23 erzeugen an dem zum Wählen einer Gasse mit Vorwärtsgängen geschwenkten Schalthebel 2 eine relativ geringe Wählkraft. Beim Schalten eines der Gänge aus den Gassen verharren die Ablaufrollen 23 jeweils in einer der mit I-II oder V-VI gekennzeichneten Positionen auf der jeweiligen Rampe 21. In diesen Positionen steht der Schalthebel 2 in einer der Gassen I-II oder V-VI, aus der dann in der jeweiligen Gasse durch Schwenken des Schaltfingers 2 ein Gang schaltbar ist. Wird der Schalthebel 2 mit der Konsole 10 über die Position V-VI weiter hinausgeschwenkt, so trifft die an der Rampe 21 aufsteigende Ablaufrolle 23 auf einen Abschnitt der Rampe 21 der stark von der Abszisse 26 weg abgeknickt ansteigt. An der Konsole 10 und somit an dem Schalthebel 2 wird aufgrund des steilen Anstieges eine Wählkraft erzeugt, die deutlich über der Wählkraft zur Wahl der Vorwärtsgänge liegt. Der Schalthebel 2 ist im Begriff sich in die Gasse zum Schalten des Rückwärtsganges R zu bewegen. Dem steilen Anstieg an der Rampe 21 folgt schließlich bis in die Position R wieder ein flacher Anstieg. Steht die Ablaufrolle 23 in der Position R ist die Gasse des Rückwärtsganges R gewählt. Diese Stellung ist in der Figur 8b zeichnerisch dargestellt. Aus der Stellung R ist der Schalthebel 2 um die Schwenkachse 8a zum Schalten des Rückwärtsganges R schwenkbar.

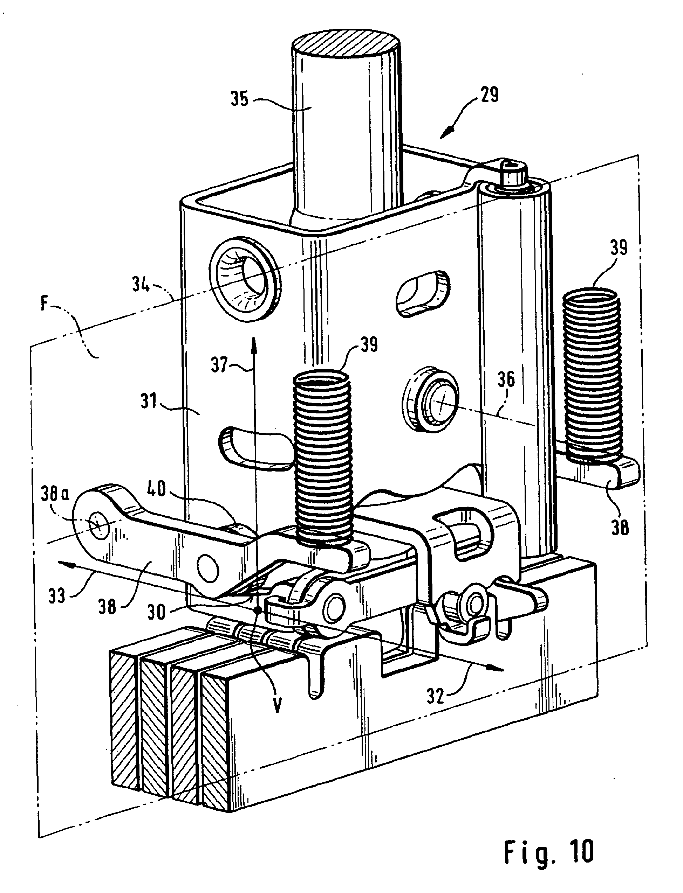

Figur 10 zeigt ein weiteres Ausführungsbeispiel einer erfindungsgemäßen Lageranordnung. Die Lageranordnung 29 ist ohne Gehäuse dargestellt. Ihr Aufbau entspricht im Wesentlichen der Lageranordnung 1 nach den Figuren 1 bis 9. Sie unterscheidet sich in ihrem Aufbau jedoch von der Anordnung der Vorrichtung zum Erhöhen der Wählkraft. Die Lageranordnung 29 weist zwei Rampen 30 auf, von denen eine zeichnerisch dargestellt und die andere durch eine Konsole 31 verdeckt ist. Die Rampe 30 steigt wie in dem vorgenannten Beispiel über zwei in entgegengesetzte Richtungen weisenden Abszissen 32 und 33 an. Die Abszissen gehen rechtwinklig von einer gedachten, mit der Kippachse 34 des Schalthebels 35 verlaufenden sowie senkrecht von der Schwenkachse 36 des Schalthebels 35 durchdrungenen Ebene F ab. Der Koordinatenursprung V des Koordinatensystems liegt in der Ebene F. Von dem Koordinatenursprung V geht rechtwinklig zu den Abszissen 32 und 33 eine mit der Ebene F verlaufende Ordinate 37 ab. Die Rampe 30 steigt über den Abszissen 32 von dem Koordinatenursprung V aus an und ist somit der Kippachse 34 zugewandt. Jeweils ein um einen Drehpunkt 38a schwenkbar zu dem nicht dargestellten Gehäuse gelagerter Hebel 38 ist mittels einer Druckfeder 39 gegen jeweils eine Rampe 30 vorgespannt. An jedem der Hebel 38 ist eine Ablaufrolle 39 drehbar befestigt. Jede der Federn 39 ist eine Druckfeder und drückt die jeweils einen der Hebel 38 mit der Ablaufrolle 40 gegen die Rampe 30. Der um die Kippachse 34 mit der Konsole 31 geschwenkte Schalthebel 35 schwenkt die Rampen 30 gegen die in Bewegungsrichtung der Rampe 30 an dem Hebel 38 feste Ablaufrolle 40. Die Ablaufrolle 40 steigt, an der Rampe 30 abrollend, an der Rampe 30 auf.

### Bezugezeichen

- 1: Lageranordnung
- 2: Schalthebel
- 2a: Schaltfinger
- 2b: Mittelachse
- 2c: Schaltknauf
- 3: Gehäuse
- 4: Schaltschiene
- 4a: Eingriffsnut
- 4b: Schlitz
- 5: Schaltschiene
- 5a: Eingriffsnut
- 6: Schaltschiene
- 6a: Eingriffsnut
- 7: Schaltschiene
- 7a: Eingriffsnut
- 8: Schwenkbolzen
- 8a: Schwenkachse
- 9: Kippbolzen
- 9a: Kippachse
- 10: Konsole
- 10a: Lagerauge
- 10b: Lagerauge
- 10c: Wand
- 10d: Öffnung
- 10e: Hülse
- 11: Anschlag
- 11a: Langloch
- 12: Sperrfinger
- 12a: Freimachung

- 13: Gleitlager
- 14: Langloch
- 15: Rastkontur
- 15a: Rastvertiefung
- 15b: Rastvertiefung
- 15c: Rastvertiefung
- 15d: Verlängerung
- 16: Rastelement
- 17: Rolle
- 17a: Bolzen
- 18: Kipphebel
- 18a: Kipppunkt
- 18b: Bolzen
- 18c: Ende
- 18d: Ende
- 19: Vorsprung
- 20: Feder
- 21: Rampe
- 22: Feder
- 23: Ablaufrolle
- 24: Hebel
- 24a: Drehpunkt
- 25: Blech
- 26: Abszisse
- 27: Abszisse
- 28: Ordinate
- 29: Lageranordnung
- 30: Rampe
- 31: Konsole
- 32: Abszisse

- 33: Abszisse
- 34: Kippachse
- 35: Schalthebel
- 36: Schwenkachse
- 37: Ordinate
- 38: Hebel
- 38a: Drehpunkt
- 39: Feder
- 40: Ablaufrolle

## Patentansprüche

1. Vorrichtung zum Erhöhen einer Wählkraft an einem um eine Schwenkachse (8a, 36) sowie um eine quer zur Schwenkachse (8a, 36) ausgerichtete Kippachse (9a, 34) schwenkbaren Schalthebel (2, 35), wobei die Wählkraft bei Schwenkbewegungen des Schalthebels (2, 35) um die Kippachse (9a, 34) mittels mindestens eines gegen eine Feder (22, 39) beweglichen Hebels (24, 38) und einer mit dem Hebel (24, 38) in einer Wirkverbindung stehenden Ablaufrolle (23, 40) erzeugt ist, **dadurch gekennzeichnet, dass** die Vorrichtung in einer Lageranordnung (1, 29) zur schwenkbaren Lagerung eines Schalthebels (2, 35) mittels einer Konsole (10, 31) in einem Gehäuse (3) integriert ist, wobei die Lageranordnung (1, 29) den Schalthebel (2, 35) in der Konsole (10, 31) um die Schwenkachse (8a, 36) zu der Konsole (10, 31) schwenkbar sowie den Schalthebel (2, 35) mit der Konsole (10, 31) um die quer zur Schwenkachse (8a, 36) ausgerichtete Kippachse (9a, 34) schwenkbar zu dem Gehäuse (3) lagert.

2. Vorrichtung nach Anspruch 1, **dadurch gekennzeichnet, dass** die Vorrichtung zumindest aus einer zur Konsole feste Rampe (21, 30) und der drehbar an dem Hebel (24, 38) befestigten Ablaufrolle (23, 40) gebildet ist, wobei der Hebel (24, 38) um einen zu dem Gehäuse (3) festen Drehpunkt (24a, 38a) schwenkbar ist und mit wenigstens der von dem Drehpunkt (24a, 38a) entfernt an dem Hebel (24, 38) angreifenden Feder (22, 39) über die Ablaufrolle (23, 40) gegen die Rampe (21, 30) vorgespannt ist und wobei die Rampe (21, 30) bei Schwenkbewegungen des Schalthebels (2, 35) um die Kippachse (9a, 34) mit der Konsole (10, 31) schwenkt und die an dem Gehäuse (3) abgestützte Ablaufrolle (23, 40) dabei auf der Rampe (21, 30) abrollt.

3. Vorrichtung nach Anspruch 2, **dadurch gekennzeichnet, dass** an der Konsole (10) zwei der Rampen (21) angeordnet sind und dass auf jede der Rampen (21) jeweils einer der Hebel (24) mit jeweils einer der Ablaufrollen (23) wirkt, wobei die Hebel (24), die Konsole (10) mit den Rampen (21) zwischen sich nehmend, gegeneinander mittels wenigstens einer Zugfeder (22) verspannt sind und wobei die Zugfeder (22) jeweils an einem dem Drehpunkt (24a) abgewandten freien Ende eines jeden der Hebel (24) eingehängt ist.

4. Vorrichtung nach Anspruch 2, **dadurch gekennzeichnet, dass** die Rampe (21, 30) über wenigstens einer quer von einer gedachten Ebene abgehenden gedachten Abszisse (26, 27, 32, 33) ansteigt, wobei die Ebene mit der Kippachse (9a, 34) verläuft sowie dabei rechtwinklig von der Schwenkachse (8a, 36) durchdrungen ist und wobei die Rampe (21, 30) über der Abszisse (26, 27, 32 33) von der Ebene weg ansteigend verläuft, wodurch die Ablaufrolle (23, 40) bei einem um die Kippachse (9a, 36) geschwenkten Schalthebel (2, 35) gegen die Kraft der Feder (22, 39) an der Rampe aufsteigt.

5. Vorrichtung nach Anspruch 4, **dadurch gekennzeichnet, dass** die Rampe (21, 30) über der Abszisse (27, 32) von dem Koordinatenursprung weg anfangs flach ansteigt und die Rampe (21, 30) in ihrem weiteren Verlauf über der Abszisse (27, 32) sich an die flach ansteigende Rampe (21, 30) anschließend von der Abszisse (27, 32) weg abgeknickt ansteigt und schließlich flach ausläuft und wobei die Ablaufrolle (23, 40), wenn der Schalthebel (2, 35) um die Kippachse (9a, 34) aus der Neutralstellung schwenkt, anfangs an der flach ansteigenden Rampe (21, 30) abrollt und bei in die gleiche Schwenkrichtung weiter schwenkenden Schalthebel (2, 35) auf die abgeknickt ansteigende Rampe (21, 30) trifft.

6. Vorrichtung nach Anspruch 4 oder 5, **dadurch gekennzeichnet, dass** die den Verlauf der Rampe (21) beschreibende Ordinate (28) parallel zu der Kippachse (9a) mit der Ebene verläuft.

7. Vorrichtung nach Anspruch 4 oder 5, **dadurch gekennzeichnet, dass** die den Verlauf der Rampe (21) beschreibende Ordinate (28) parallel zu der Kippachse (9a) mit der Ebene verläuft und dass die durch den Drehpunkt (24a) verlaufende Drehachse des Hebels (24) und die Rotationsachse der Ablaufrolle (23) quer zur Kippachse (9a) des Schalthebels (2) ausgerichtet sind.

8. Vorrichtung nach Anspruch 4 oder 5, **dadurch gekennzeichnet, dass** die den Verlauf der Rampe beschreibende Ordinate (37) senkrecht zu der Kippachse (34) ausgerichtet mit der Ebene verläuft

9. Vorrichtung nach Anspruch 4 oder 5, **dadurch gekennzeichnet, dass** die den Verlauf der Rampe beschreibende Ordinate (37) senkrecht zu der Kippachse (34) ausgerichtet mit der Ebene verläuft und dass die durch den Drehpunkt (38a) verlaufende Drehachse des Hebels (38) und die Rotationsachse der Ablaufrolle (40) parallel zur Kippachse (34) des Schalthebels (35) ausgerichtet sind.

10. Vorrichtung nach einem der Ansprüche 3 oder 4, **dadurch gekennzeichnet, dass** die Rampe (21, 30) ausgehend von dem in der Ebene liegenden Koordinatenursprung über einer ersten Abszisse (26, 27, 32, 33) sowie über einer entgegengesetzt zu der ersten Abszisse (26, 27, 32, 33) gerichteten zweiten Abszisse (26, 27, 32, 33) beidseitig von der Ebene weg ansteigt, wobei die Rampe (21, 30) mittels der am Koordinatenursprung an der Rampe (21, 30) zentrierten Ablaufrolle (23, 40) den Schalthebel (2, 35) in einer Neutralstellung hält und dass die Rampe (21, 30) über der ersten Abszisse (26, 33) von dem Koordinatenursprung weg flach sowie über der zweiten Abszisse (27, 32) anfangs flach ansteigt, wobei die Rampe (21, 30) in ihrem weiteren Verlauf über der zweiten Abszisse (27, 32) an die flach ansteigende Rampe (21, 30) anschließend von der zweiten Abszisse (27, 32) weg abgeknickt ansteigt und schließlich flach ausläuft und wobei die Ablaufrolle (23, 40) an der flach ansteigenden Rampe (21, 30) abrollt, wenn der Schalthebel (2, 35) um die Kippachse (9a, 34) aus der Neutralstellung wahlweise in eine Schwenkrichtung schwenkt, sowie auf die abgeknickt ansteigende Rampe (21, 30) trifft, wenn der Schalthebel (2, 35) um die Kippachse (9a, 34) auf die zweite Abszisse (27, 32) zu schwenkt.

11. Vorrichtung nach Anspruch 1, **dadurch gekennzeichnet, dass** die Kippachse (9a, 34) und die Schwenkachse (8a, 36) zueinander beabstandet verlaufen.

12. Vorrichtung nach Anspruch 1, **dadurch gekennzeichnet, dass** der Schalthebel (2, 35) an einem freien Ende einen um die Kippachse (9a, 34) sowie die Schwenkachse (8a, 36) schwenkbaren Schaltfinger (2a) aufweist,

13. Vorrichtung nach Anspruch 12, **dadurch gekennzeichnet, dass** dem Schaltfinger (2, 35) wenigstens eine erste Schaltschiene (4, 5, 6, 7) und eine zweite Schaltschiene (4, 5, 6, 7) zugeordnet sind, wobei der um die Kippachse (9a, 34) geschwenkte Schaltfinger (2a) formschlüssig beweglich wahlweise in eine der Schaltschienen (4, 5, 6, 7) eingreift und wobei die Schaltschiene (4, 5, 6, 7), in die der Schaltfinger (2a) eingreift, mittels des um die Schwenkachse (8a, 36) schwenkenden Schaltfingers (2a) in mindestens eine Richtung längs verschiebbar ist.

14. Lageranordnung nach Anspruch 1, **dadurch gekennzeichnet, dass** der Schalthebel (2, 35) zwischen einer ersten Wand und einer der ersten Wand gegenüberliegenden zweiten Wand der Konsole (10, 31) mit zumindest einem die Schwenkachse (9a, 34) aufweisenden Schwenkbolzen (8) gelagert ist,.

15. Lageranordnung nach Anspruch 1, **dadurch gekennzeichnet, dass** die Konsole (10, 31) mittels wenigstens eines Kippbolzens (9) an dem Gehäuse (3) schwenkbar gelagert ist, wobei die Mittenachse des Kippbolzens (9) und die Kippachse (9a) übereinstimmen.

## Claims

1. Device for increasing a selection force on a gear-shift lever (2, 35) pivotable about a pivot axis (8a, 36) and also about a tilt axis (9a, 34) oriented transversely to the pivot axis (8a, 36), the selection force being produced, upon pivoting movements of the gear-shift lever (2, 35) about the tilt axis (9a, 34), by means of at least one lever (24, 38) movable counter to a spring (22, 39) and a running roller (23, 40) placed in operative connection with the lever (24, 38), **characterized in that** the device is integrated into a mounting arrangement (1, 29) for pivotably mounting the gear-shift lever (2, 35) by means of a bracket (10, 31) in a housing (3), wherein the mounting arrangement (1, 29) mounts the gear-shift lever (2, 35) in the bracket (10, 31) pivotably about the pivot axis (8a, 36) with respect to the bracket (10, 31) and also mounts the gear-shift lever (2, 35) with the bracket (10, 31) pivotably with respect to the housing (3) about the tilt axis (9a, 34) oriented transversely to the pivot axis (8a, 36).

2. Device according to Claim 1, **characterized in that** the device is formed at least of one ramp (21, 30) fixed to the bracket and the running roller (23, 40) fastened rotatably to the lever (24, 38), wherein the lever (24, 38) is pivotable about a fulcrum (24a, 38a) fixed to the housing (3) and is preloaded via the running roller (23, 40) towards the ramp (21, 30) by at least the spring (22, 39) acting on the lever (24, 38) at a point remote from the fulcrum (24a, 38a), and wherein the ramp (21, 30) pivots with the bracket (10, 31) about the tilt axis (9a, 34) upon pivoting movements of the gear-shift lever (2, 35) and the running roller (23, 40) supported on the housing (3) rolls on the ramp (21, 30).

3. Device according to Claim 2, **characterized in that** two of the ramps (21) are arranged on the bracket (10) and **in that** in each case one of the levers (24) with in each case one of the running rollers (23) acts on each of the ramps (21), wherein the levers (24), having the bracket (10) with the ramps (21) between them, are preloaded towards one another by means of at least one tension spring (22) and wherein the tension spring (22) is in each case fitted to a free end, remote from the fulcrum (24a), of each of the levers (24).

4. Device according to Claim 2, **characterized in that** the ramp (21, 30) rises over at least one notional abscissa (26, 27, 32, 33) extending transversely of a notional plane, wherein the plane coincides with the tilt axis (9a, 34) and is passed through at right angles by the pivot axis (8a, 36) and wherein the ramp (21, 30) rises over the abscissa (26, 27, 32, 33) away from the plane, whereby the running roller (23, 40) ascends against the ramp counter to the force of the spring (22, 39) when the gear-shift lever (2, 35) is pivoted about the tilt axis (9a, 36).

5. Device according to Claim 4, **characterized in that** the ramp (21, 30) rises initially in shallow manner away from the coordinate origin over the abscissa (27, 32) and, as it continues over the abscissa (27, 32), the ramp (21, 30) rises sharply away from the abscissa (27, 32) following the shallow rising ramp (21, 30) and finally ends in shallow manner, and wherein the running roller (23, 40), when the gear-shift lever (2, 35) pivots out of the neutral position about the tilt axis (9a, 34), initially rolls on the shallow rising ramp (21, 30) and encounters the sharply rising ramp (21, 30) when the gear-shift lever (2, 35) pivots further in the same pivot direction.

6. Device according to Claim 4 or 5, **characterized in that** the ordinate (28) describing the course of the ramp (21) extends with the plane parallel to the tilt axis (9a).

7. Device according to Claim 4 or 5, **characterized in that** the ordinate (28) describing the course of the ramp (21) extends with the plane parallel to the tilt axis (9a) and **in that** the axis of rotation of the lever (24) running through the fulcrum (24a) and the axis of rotation of the running roller (23) are oriented transversely relative to the tilt axis (9a) of the gear-shift lever (2).

8. Device according to Claim 4 or 5, **characterized in that** the ordinate (37) describing the course of the ramp extends with the plane in a perpendicular orientation with respect to the tilt axis (34).

9. Device according to Claim 4 or 5, **characterized in that** the ordinate (37) describing the course of the ramp extends with the plane in a perpendicular orientation with respect to the tilt axis (34) and **in that** the axis of rotation of the lever (38) running through the fulcrum (38a) and the axis of rotation of the running roller (40) are oriented parallel to the tilt axis (34) of the gear-shift lever (35).

10. Device according to Claim 3 or 4, **characterized in that**, starting from the coordinate origin situated in the plane, the ramp (21, 30) rises, over a first abscissa (26, 27, 32, 33) and also over a second abscissa (26, 27, 32, 33) directed oppositely to the first abscissa (26, 27, 32, 33), on both sides away from the plane, wherein the ramp (21, 30) keeps the gear-shift lever (2, 35) in a neutral position by means of the running roller (23, 40) centred on the ramp (21, 30) at the coordinate origin, and **in that** the ramp (21, 30) initially rises in shallow manner away from the coordinate origin over the first abscissa (26, 33) and also rises in shallow manner over the second abscissa (27, 32), wherein, as it continues over the second abscissa (27, 32), the ramp (21, 30) rises sharply away from the second abscissa (27, 32) following the shallow rising ramp (21, 30) and finally ends in shallow manner, and wherein the running roller (23, 40) rolls on the shallow rising ramp (21, 30) when the gear-shift lever (2, 35) pivots from the neutral position optionally in a pivot direction about the tilt axis (9a, 34), and also encounters the sharply rising ramp (21, 30) when the gear-shift lever (2, 35) pivots about the tilt axis (9a, 34) towards the second abscissa (27, 32).

11. Device according to Claim 1, **characterized in that** the tilt axis (9a, 34) and the pivot axis (8a, 36) extend at a distance from one another.

12. Device according to Claim 1, **characterized in that** the gear-shift lever (2, 35) comprises at one free end a gear-shift finger (2a) pivotable about the tilt axis (9a, 34) and the pivot axis (8a, 36).

13. Device according to Claim 12, **characterized in that** at least one first gear-shift rail (4, 5, 6, 7) and one second gear-shift rail (4, 5, 6, 7) are associated with the gear-shift finger (2a), wherein the gear-shift finger (2a) pivoted about the tilt axis (9a, 34) engages interlockingly and movably optionally in one of the gear-shift rails (4, 5, 6, 7) and wherein the gear-shift rail (4, 5, 6, 7) in which the gear-shift finger (2a) is engaged may be displaced longitudinally in at least one direction by means of the gear-shift finger (2a) pivoting about the pivot axis (8a, 36).

14. Mounting arrangement according to Claim 1, **characterized in that** the gear-shift lever (2, 35) is mounted between a first wall and a second wall of the bracket (10, 31) opposite the first wall by at least one pivot pin (8) including the pivot axis (8a, 36).

15. Mounting arrangement according to Claim 1, **characterized in that** the bracket (10, 31) is mounted pivotably on the housing (3) by means of at least one tilt pin (9), wherein the central axis of the tilt pin (9) and the tilt axis (9a) coincide.

## Revendications

1. Dispositif d'accroissement d'une force de sélection sur un levier de commutation (2, 35) pouvant pivoter autour d'un axe de pivotement (8a, 36) ainsi qu'autour d'un axe de basculement (9a, 34) orienté transversalement à l'axe de pivotement (8a, 36), dans lequel la force de sélection, en cas de mouvements de pivotement du levier de commutation (2, 35) autour de l'axe de basculement (9a, 34), est générée au moyen d'au moins un levier (24, 38) mobile à l'encontre d'un ressort (22, 39) et d'un rouleau de roulement (23, 40) en liaison fonctionnelle avec le levier (24, 38), **caractérisé en ce que** le dispositif est intégré dans un dispositif de palier (1, 29) permettant l'appui en pivotement d'un levier de commutation (2, 35), au moyen d'une console (10, 31), dans un boîtier (3), le dispositif de palier (1, 29) appuyant le levier de commutation (2, 35) dans la console (10, 31) de manière à ce que ce dernier puisse pivoter autour de l'axe de pivotement (8a, 36) par rapport à la console (10, 31) ainsi que le levier de commutation (2, 35) avec la console (10, 31) de manière à ce que ce dernier puisse pivoter au moyen de la console (10, 31) autour de l'axe de basculement (9a, 34) orienté transversalement à l'axe de pivotement (8a, 36) par rapport au boîtier (3).

2. Dispositif selon la revendication 1, **caractérisé en ce que** le dispositif est constitué d'au moins une rampe fixe par rapport à la console (21, 30) et du rouleau de roulement (23, 40) fixé de manière à pouvoir tourner sur le levier (24, 38), le levier (24, 38) pouvant pivoter autour d'un point de rotation (24a, 38a) fixe par rapport au boîtier (3) et étant précontraint à l'aide au moins du ressort (22, 39) s'engrenant sur le levier (24, 38) à distance du point de rotation (24a, 38a) au-dessus du rouleau de roulement (23, 40) contre la rampe (21, 30) et la rampe (21, 30), en cas de mouvements de pivotement du levier de commutation (2, 35), pivotant autour de l'axe de basculement (9a, 34) au moyen de la console (10, 31) et le rouleau de roulement (23, 40) qui s'appuie sur le boîtier (3) roulant alors sur la rampe (21, 30).

3. Dispositif selon la revendication 2, **caractérisé en ce que** deux des rampes (21) sont disposées sur la console (10) et **en ce que** sur chacune des rampes (21) agit respectivement un des leviers (24) comportant respectivement un des rouleaux de roulement (23), les leviers (24) prenant entre eux la console (10) comportant les rampes (21) étant serrés l'un contre l'autre au moyen d'au moins un ressort de traction (22) et le ressort de traction (22) étant accroché respectivement à une extrémité libre détournée du point de rotation (24a) de chacun des leviers (24).

4. Dispositif selon la revendication 2, **caractérisé en ce que** la rampe (21, 30) monte sur au moins une abscisse imaginaire (26, 27, 32, 33) partant transversalement d'un plan imaginaire, le plan s'étendant avec l'axe de basculement (9a, 34) tout en étant traversé orthogonalement par l'axe de pivotement (8a, 36) et la rampe (21, 30) s'étendant en montant sur l'abscisse (26, 27, 32, 33) depuis le plan, ce qui a pour effet que le rouleau de roulement (23, 40), dans le cas d'un levier de commutation (2, 35) pivoté autour de l'axe de basculement (9a, 36), monte sur la rampe à l'encontre de la force du ressort (22, 39).

5. Dispositif selon la revendication 4, **caractérisé en ce que** la rampe (21, 30) démarre en montant en pente douce sur l'abscisse (27, 32) depuis l'origine de la coordonnée et que la rampe (21, 30), dans la suite de son extension sur l'abscisse (27, 32), en se raccordant à la rampe montant en pente douce (21, 30), monte en coude depuis l'abscisse (27, 32) et se termine enfin en pente douce, tandis que le rouleau de roulement (23, 40), lorsque le levier de commutation (2, 35) pivote autour de l'axe de basculement (9a, 34) depuis la position neutre, roule au début sur la rampe (21, 30) montant en pente douce et, dans le cas où le levier de commutation (2, 35) continue à pivoter dans le même sens de pivotement, rencontre la rampe montant en coude (21, 30).

6. Dispositif selon la revendication 4 ou 5, **caractérisé en ce que** l'ordonnée (28) décrivant l'extension de la rampe (21) s'étend parallèlement à l'axe de basculement (9a) avec le plan.

7. Dispositif selon la revendication 4 ou 5, **caractérisé en ce que** l'ordonnée (28) décrivant l'extension de la rampe (21) s'étend parallèlement à l'axe de basculement (9a) avec le plan et **en ce que** l'axe de rotation s'étandant en traversant le point de rotation (24a) du levier (24) et l'axe de rotation du rouleau de roulement (23) sont orientés transversalement à l'axe de basculement (9a) du levier de commutation (2).

8. Dispositif selon la revendication 4 ou 5, **caractérisé en ce que** l'ordonnée (37) décrivant l'extension de la rampe s'étend avec une orientation perpendiculaire à l'axe de basculement (34) avec le plan.

9. Dispositif selon la revendication 4 ou 5, **caractérisé en ce que** l'ordonnée (37) décrivant l'extension de la rampe s'étend avec une orientation perpendiculaire à l'axe de basculement (34) avec le plan et **en ce que** l'axe de rotation s'étandant traversant le point de rotation (38a) du levier (38) et l'axe de rotation du rouleau de roulement (40) sont orientés parallèlement à l'axe de basculement (34) du levier de commutation (35).

10. Dispositif selon l'une quelconque des revendications 3 ou 4, **caractérisé en ce que** la rampe (21, 30), en partant de l'origine de la coordonnée se trouvant dans le plan, monte sur une première abscisse (26, 27, 32, 33) ainsi que sur une deuxième abscisse (26, 27, 32, 33) orientée à l'opposé de la première abscisse (26, 27, 32, 33) des deux côtés depuis le plan, la rampe (21, 30) arrêtant, au moyen du rouleau de roulement (23, 40) centré à l'origine de la coordonnée sur la rampe (21, 30), le levier de commutation (2, 35) dans une position neutre et **en ce que** la rampe (21, 30) démarre en montant en pente douce sur la première abscisse (26, 33) depuis l'origine de la coordonnée ainsi que sur la deuxième abscisse (27, 32), tandis que la rampe (21, 30) monte en coude dans la suite de son extension sur la deuxième abscisse (27, 32), en se raccordant à la rampe montant (21, 30) en pente douce, depuis la deuxième abscisse (27, 32) et se termine enfin en pente douce et que le rouleau de roulement (23, 40) roule sur la rampe montant (21, 30) en pente douce, lorsque le levier de commutation (2, 35) pivote au choix autour de l'axe de basculement (9a, 34) de la position neutre dans un sens de pivotement, et lorsque la rampe montant en coude (21, 30) si le levier de commutation (2, 35) pivote autour de l'axe de pivotement (9a, 34) vers la deuxième abscisse (27, 32).

11. Dispositif selon la revendication 1, **caractérisé en ce que** l'axe de basculement (9a, 34) et l'axe de pivotement (8a, 36) s'étendent avec un espacement l'un par rapport à l'autre.

12. Dispositif selon la revendication 1, **caractérisé en ce que** le levier de commutation (2, 35) présente à une extrémité libre un doigt de commutation (2a) pouvant pivoter autour de l'axe de basculement (9a, 34) ainsi que de l'axe de pivotement (8a, 36).

13. Dispositif selon la revendication 12, **caractérisé en ce qu'**au doigt de commutation (2a) sont associés au moins un premier rail de commutation (4, 5, 6, 7) et un deuxième rail de commutation (4, 5, 6, 7), le doigt de commutation (2a) pivoté autour de l'axe de basculement (9a, 34) s'engrenant de manière mobile en correspondance géométrique au choix dans un des rails de commutation (4, 5, 6, 7) et le rail de commutation (4, 5, 6, 7) dans lequel le doigt de commutation (2a) s'engrène pouvant être déplacé en longueur au moyen du doigt de commutation (2a) pivotant autour de l'axe de pivotement (8a, 36) dans au moins un sens.

14. Dispositif de palier selon la revendication 1, **caractérisé en ce que** le levier de commutation (2, 35) s'appuie entre une première paroi et une deuxième paroi opposée à la première paroi de la console (10, 31) par au moins un goujon pivotant (8) présentant l'axe de pivotement (8a, 36).

15. Dispositif de palier selon la revendication 1, **caractérisé en ce que** la console (10, 31) s'appuie de manière pivotable au moyen d'au moins un goujon basculant (9) sur le boîtier (3), l'axe médian du goujon basculant (9) et l'axe de basculement (9a) coïncidant.
